# EUROPÄISCHE PATENTSCHRIFT

(11) **EP 0 921 584 B1**
(45) Veröffentlichungstag und Bekanntmachung des Hinweises auf die Patenterteilung: **05.03.2003**
(21) Anmeldenummer: 98120914.1
(22) Anmeldetag: 04.11.1998
(51) Int. Cl.: H01M 8/06, C01B 3/38, C01B 3/48, C01B 3/32, C01B 3/58

(54) **Anlage zur Wasserdampfreformierung eines Kohlenwasserstoffs**
Device for steam reforming of hydrocarbons
Dispositif de reformage à la vapeur d'eau d' hydrocarbures

(30) Priorität: 05.12.1997 DE 19754012
(43) Veröffentlichungstag der Anmeldung: 09.06.1999
(73) Patentinhaber: Ballard Power Systems AG, 73230 Kirchheim / Teck-Nabern (DE)
(72) Erfinder: Autenrieth, Rainer, 89155 Erbach (DE); Boneberg, Stefan, 89134 Blaustein (DE); Christen, Andreas, 53940 Kehr (DE); Heil, Dietmar, 88477 Hörenhausen (DE); Strobel, Barbara, 89160 Dornstadt (DE); Wieland, Steffen, 70180 Stuttgart (DE); Zur Megede, Detlef Dr., 73230 Kirchheim/Teck (DE)
(74) Vertreter: Beyer, Andreas, Dr.

(56) Entgegenhaltungen:
- EP-A- 0 529 329
- EP-A- 0 861 802
- DE-A- 3 803 080
- US-A- 4 746 329
- US-A- 5 516 344
- PATENT ABSTRACTS OF JAPAN vol. 096, no. 001, 31. Januar 1996 (1996-01-31) & JP 07 232901 A (AQUEOUS RES:KK), 5. September 1995 (1995-09-05)
- PATENT ABSTRACTS OF JAPAN vol. 095, no. 008, 29. September 1995 (1995-09-29) & JP 07 126001 A (AQUEOUS RES:KK), 16. Mai 1995 (1995-05-16)

## Beschreibung

Die Erfindung bezieht sich auf eine Anlage zur Wasserdampfreformierung eines Kohlenwasserstoffs. Anlagen dieser Art werden beispielsweise im mobilen Einsatz in brennstoffzellenbetriebenen Kraftfahrzeugen zur Wasserdampfreformierung von flüssig mitgeführtem Methanol verwendet, um dadurch den für die Brennstoffzellen benötigten Wasserstoff bereitzustellen, ohne einen größeren Wasserstoffspeicher zu benötigen. Für diesen Anwendungsfall ist eine kompakte Bauform der Anlage gefordert, die sich mit relativ geringem Gewicht und möglichst geringem Aufwand realisieren läßt. Des weiteren ist für die Kraftfahrzeuganwendung ein rasches Reagieren der Anlage auf Lastwechsel erwünscht, wozu wiederum eine kompakte Bauform günstig ist. Weitere wünschenswerte Eigenschaften gerade auch solcher mobiler Anlagen sind ein hoher Wirkungsgrad und ein geringer Steuerungs- und Regelungsaufwand, wodurch sich eine hohe Systemzuverlässigkeit erreichen läßt.

Es sind bereits Anlagen der eingangs genannten Art bekannt, bei denen zur Erzielung einer kompakten Bauform gewisse Anlagenkomponenten in ein jeweiliges gemeinsames Bauteil integriert sind. So sind in den Offenlegungsschriften JP 62138306 A, JP 63021203 A und JP 63040701 A Reformierungsanlagen beschrieben, bei denen der die Reformierungsreaktion durchführende Reformer und ein vorgeschalteter Verdampfer in ein gemeinsames Reaktorbauteil integriert sind, dem außerdem ein Brenner zugeordnet ist, in welchem ein Brennstoff unter Entflammen verbrannt wird, um den Verdampfer direkt aufzuheizen. Zusätzlich kann vorgesehen sein, den Reformer durch die heißen Verbrennungsabgase des Brenners zu beheizen.

Bei einer in der Patentschrift US 5 516 344 offenbarten Reformierunganlage ist der Reformer zusammen mit einem diesem nachgeschalteten CO-Shiftkonverter in einem gemeinsamen Bauteil integriert, dem ein Brenner zugeordnet ist, der ein zugeführtes, brennbares Gemisch unter Entflammung verbrennt. Mit den heißen Verbrennungsabgasen werden dann unter anderem der Reformer und der CO-Shiftkonverter aufgeheizt.

In der Offenlegungsschrift JP 07126001 A ist eine Anlage der eingangs genannten Art beschrieben, die eine Reaktorbaueinheit vom Plattenstapeltyp beinhaltet. Diese Reaktorbaueinheit enthält integriert einen Verdampfer, einen Reformer und einen CO-Oxidator, wobei diese drei Anlagenkomponenten seriell in einer Stapelquerrichtung hintereinanderliegend in Form einer ersten Gruppe übernächster Plattenschichten angeordnet sind. Dem Verdampfer ist ein Brenner vorgeschaltet, in welchem ein zugeführtes Gemisch unter Entflammung verbrannt wird. Die heißen Verbrennungsabgase werden parallel zum Reformierungsgasstrom durch eine zweite Gruppe übernächster Plattenschichten des eine Wärmeübertragerstruktur bildenden Plattenstapels hindurchgeleitet, die sich mit denjenigen der ersten Gruppe abwechseln, und heizen dadurch den Verdampfer, den Reformer und den CO-Oxidator auf.

In der Patentschrift US 4 746 329 ist ein Methanolreformierungsreaktor mit einem zylindrischen Aufbau aus mehreren radial aufeinanderfolgenden Ringräumen offenbart. An der Unterseite des Reaktorzylinders befindet sich eine Brennereinheit, die von einem katalytischen Brenner gebildet sein kann. Die heißen Brennerabgase werden durch den radial äußersten Ringraum nach oben geführt und dann in den radial innen benachbarten Ringraum umgelenkt, wo sie in Wärmekontakt zu einem radial innen anschließenden Reformierungsringraum stehen. Dabei erstreckt sich ein oberer Teil des Reformierungsraums über die äußeren, das Verbrennungsgas führenden Ringräume hinaus, so daß in diesem Bereich eine geringere Betriebstemperatur herrscht. Dieser kühlere, obere Reformierungsraumbereich dient als CO-Shifteinheit. An den Reformierungsraum schließt sich innen ein Verdampferringraum an, der seinerseits radial nach innen über einen zylindrischen Docht an einen inneren Temperierraum angrenzt, in den die Verbrennungsgase nach abwärtiger Durchströmung des zweitäußersten Ringraums im unteren Zylinderbereich umgelenkt werden. Als Brennstoff für die Brennereinheit dient das wasserstoffhaltige Anodengas eines Brennstoffzellensystems. Die Verbrennungsabgase enthalten daher Wasserdampf, von dem nach Austreten der Verbrennungsabgase an der oberen Zylinderstirnseite wenigstens ein Teil dem Verdampfer zugeführt wird.

In der Offenlegungsschrift DE 38 03 080 A1 sind eine Reformierungsanlage zur Erzeugung von Wasserstoff, Kohlenmonoxid und Kohlendioxid enthaltenden Synthesegasen aus kohlenwasserstoffhaltigen Einsatzstoffen sowie ein Betriebsverfahren hierfür bekannt, mit denen die Einsatzstoffe zunächst einer wenigstens einstufigen Primärreformierung, dann einer partiellen Oxidation, anschließend einer weiteren, sekundären Reformierung und schließlich einer Kohlenmonoxidumwandlung unterzogen werden. Dabei wird die Abwärme der exothermen Kohlenmonoxidumwandlung für die primäre Dampfreformierung genutzt, wozu die entsprechende primäre Reformierungsstufe und die CO-Konvertierungsstufe über eine wärmeleitende Trennwand in Wärmekontakt stehen.

Aus der Offenlegungsschrift EP 0 529 329 A2 ist eine Anlage zur Energieerzeugung bekannt, welche einen Reformer zur Erzeugung von Wasserstoff aus Methangas und Wasserdampf, einen Wärmetauscher, einen Shift-Konverter zur Reduzierung von im Reformat enthaltenen CO und einen Phosphorsäure-Brennstoffzellenstack aufweist, welche in einem gemeinsamen Gehäuse integriert sind. Der einzige Reformer steht über eine Trennwand in direktem Wärmekontakt mit einem katalytischen Brenner. Das Reformat wird über den Wärmetauscher der CO-Entfernungseinheit zugeführt.

Der Erfindung liegt als technisches Problem die Bereitstellung einer Anlage der eingangs genannten Art zugrunde, die einen vergleichsweise hohen Wirkungsgrad und eine auch für den mobilen Einsatz in brennstoffzellenbetriebenen Kraftfahrzeugen ausreichende Dynamik mit geringem Steuerungs- und Regelungsaufwand besitzt und die sich sehr kompakt und mit relativ geringem Aufwand bauen läßt.

Die Erfindung löst dieses Problem durch die Bereitstellung einer Anlage mit den Merkmalen des Anspruchs 1. Diese Anlage beinhaltet eine Reaktorbaueinheit vom Plattenstapeltyp oder Rohrbündeltyp oder einem aus beiden Typen kombinierten Typ, die mindestens einen Verdampfer, eine Vorreformierungseinheit, eine Hauptreformer, eine CO-Entfernungseinheit und eine katalytische Brennereinheit in integrierter Form enthält. Mit dem Vorhandensein dieser Komponenten läßt sich ein Reformierungsumsatz mit hohem Wirkungsgrad erzielen, wobei die Konzentration des im Reformatgas enthaltenen Kohlenmonoxids durch die CO-Entfernungseinheit auf einen gewünschten Wert begrenzt werden kann. Die integrierte Bildung dieser Anlagenkomponenten in der gemeinsamen Reaktorbaueinheit schafft die Voraussetzung für eine hohe Dynamik der Anlage, so daß sie in zufriedenstellender Weise auf Lastwechsel reagieren kann, wie sie z.B. für den Betrieb von Kraftfahrzeugen typisch sind. Das Betriebsverhalten der Anlage wird weiter dadurch günstig beeinflußt, daß einerseits der Verdampfer und der Hauptreformer mit der katalytischen Brennereinheit und andererseits die Vorreformierungseinheit mit der CO-Entfernungseinheit jeweils direkt über jeweilige Wandungen in Wärmekontakt stehen.

Bei einer nach Anspruch 2 weitergebildeten Anlage beinhaltet die Brennereinheit wenigstens zwei katalytische Brenner, von denen der eine mit dem Verdampfer und der andere mit dem Hauptreformer unter Bildung je eines Moduls mit Wärmeübertragungsstruktur in Wärmekontakt steht. Die Modulbauweise für die Verdampfer/Verbrenner-Komponente und die Hauptreformer/Brenner-Komponente begünstigt einen flexiblen, modularen Aufbau der Reaktorbaueinheit.

Bei einer nach Anspruch 3 weitergebildeten Anlage beinhaltet die Vorreformierungseinheit ebenso zwei Stufen wie die CO-Enfernungseinheit, wobei sich letztere aus einer CO-Shiftstufe und einer dieser nachgeschalteten CO-Oxidationsstufe zusammensetzt. Dabei bilden die CO-Oxidationsstufe mit der ersten Vorreformierungsstufe sowie die CO-Shiftstufe mit der zweiten Vorreformierungsstufe je ein Modul mit Wärmeübertragungsstruktur. Diese Modulbauweise begünstigt wiederum, in erhöhtem Maße bei Verwendung zusammen mit dem Verdampfer/Brenner- und dem Hauptreformer/Brenner-Modul der nach Anspruch 2 ausgestalteten Anlage, einen kompakten, modularen Aufbau der Reaktorbaueinheit und damit der Anlage insgesamt. Dabei sind in einer weiteren Ausgestaltung dieser Modulbauweise die betreffenden vier Module gemäß Anspruch 4 nebeneinanderliegend angeordnet. In einer weiteren Ausgestaltung dieser Maßnahme sind gemäß Anspruch 5 thermisch isolierende Trennelemente zwischen jeweils aufeinanderfolgenden Modulen vorgesehen.

Bei einer nach Anspruch 6 weitergebildeten Anlage sind im Oxidationsstufen/Vorreformierungs-Modul und/oder im Shiftstufen/Vorreformierungs-Modul Heizkanäle vorgesehen, durch die heißes Verbrennungsabgas der katalytischen Brennereinheit durchgeführt werden kann, um diese Module aktiv zu beheizen.

Vorteilhafte Ausführungsformen der Erfindung sind in den Zeichnungen dargestellt und werden nachfolgend beschrieben. Hierbei zeigen:
- Fig. 1: eine schematische Längsschnittansicht durch eine Reaktorbaueinheit vom Plattenstapeltyp für eine Anlage zur Wasserdampfreformierung eines Kohlenwasserstoffs,
- Fig. 2: eine schematische Längsschnittsansicht einer weiteren Reaktorbaueinheit vom Plattenstapeltyp für eine Anlage zur Wasserdampfreformierung eines Kohlenwasserstoffs,
- Fig. 3: eine Draufsicht auf eine für die Reaktorbaueinheiten der Fig. 1 und 2 verwendbare Einzelplatte und
- Fig. 4: eine Draufsicht auf eine gemäß Fig. 1 aufgebaute Reaktorbaueinheit.

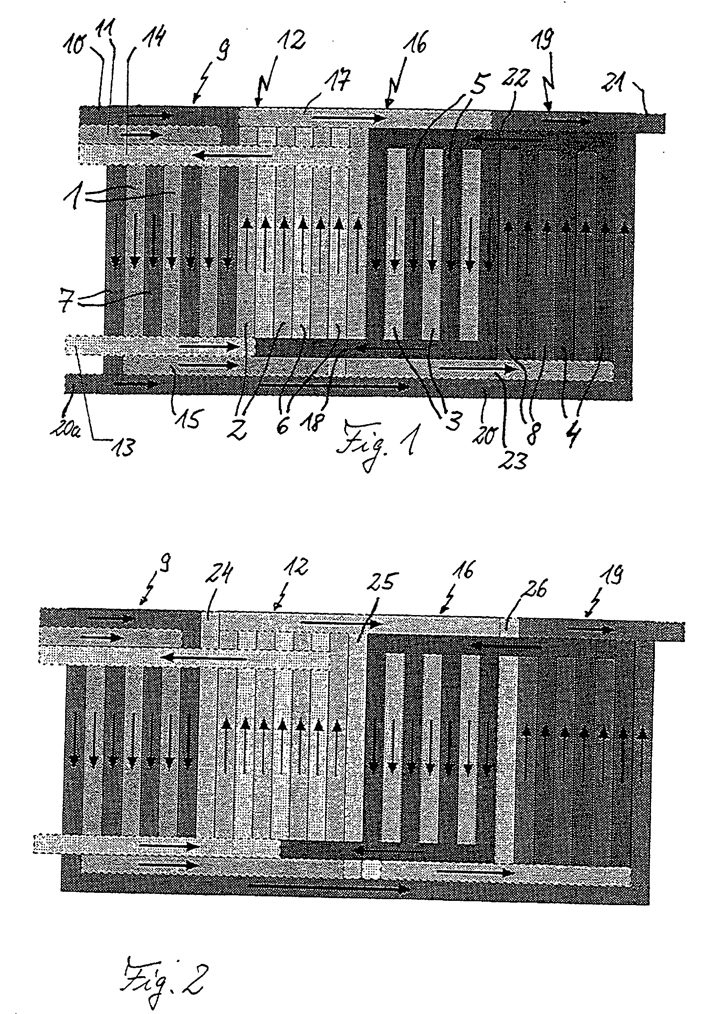

Die in Fig. 1 schematisch dargestellte Reaktorbaueinheit vom Plattenstapeltyp eignet sich als zentraler Teil einer Anlage zur Wasserdampfreformierung eines Kohlenwasserstoffs, insbesondere einer mobilen Anlage zur Wasserdampfreformierung von Methanol im mobilen Einsatz in einem brennstoffzellenbetriebenen Kraftfahrzeug, um den für die Brennstoffzellen benötigten Wasserstoff aus flüssig mitgeführtem Methanol zu erzeugen. In die Reaktorbaueinheit sind ein Verdampfer 1, eine diesem nachgeschaltete Vorreformierungseinheit mit einer ersten Vorreformierungsstufe 2 und einer dieser nachgeschalteten zweiten Vorreformierungsstufe 3, ein an die zweite Vorreformierungsstufe 3 anschließender Hauptreformer 4, eine dem Hauptreformer nachgeschaltete CO-Entfernungseinheit aus einer CO-Shiftstufe 5 und einer dieser nachgeschalteten CO-Oxidationsstufe 6 sowie zwei katalytische Brenner 7, 8 integriert.

Dabei steht der eine katalytische Brenner 7 mit dem Verdampfer 1 in Wärmekontakt, indem diese beiden Anlagenkomponenten von einem entsprechenden Verdampfer/Brenner-Modul 9 gebildet sind, das einen Plattenstapelaufbau mit einer Wärmeübertragerstruktur besitzt, bei der mehrere parallele Schichten des Verdampfers 1 einerseits und des Brenners 7 andererseits in alternierender Folge angeordnet sind und dadurch über je eine wärmeleitende Plattenwandung in Wärmekontakt stehen. Das Verdampfer/Brenner-Modul 9 besitzt einen Brennereinlaß 10 mit zugehörigem Verteilerkanal zu den parallelen Brennerschichten und einen Verdampfereinlaß 11 mit zugehörigem Verteilerkanal zur Zuführung von Methanol und Wasser zu den parallelen Verdampferschichten.

An das Verdampfer/Brenner-Modul 9 schließt sich ein Oxidationsstufen/Vorreformierungs-Modul 12 an, das wiederum einen Plattenstapelaufbau mit Wärmeübertragerstruktur besitzt, bei der zwei Gruppen jeweils übernächster, unter sich paralleler Plattenschichten über wärmeleitende Plattenwandungen in Wärmekontakt stehen. Dabei gehört die eine Gruppe übernächster Plattenschichten zur ersten Vorreformierungsstufe 2, während die andere Gruppe übernächster Plattenschichten die CO-Oxidationsstufe 6 darstellt. Dazu passend besitzt das Oxidationsstufen/Vorreformierungs-Modul 12 einen Lufteinlaß 13 mit zugehörigem Verteilerkanal für die CO-Oxidationsstufe 6 und einen von der CO-Oxidationsstufe 6 abführenden Reformatgasauslaß 14 mit zugehörigem Sammelkanal, wobei der Lufteinlaß 13 und der Reformatgasauslaß 14 das Verdampfer/Brenner-Modul 9 durchsetzen. Außerdem führt ein Verbindungskanal 15 mit verdampferseitigem Sammelkanal und vorreformierungsseitigem Verteilerkanal vom Verdampfer 1 zur ersten Vorreformierungsstufe 2.

An das Oxidationsstufen/Vorreformierungs-Modul 12 schließt sich ein Shiftstufen/Vorreformierungs-Modul 16 an, das gleichfalls als Plattenstapel mit einer Wärmeübertragerstruktur aus zwei Gruppen alternierender, über jeweilige Plattenwandungen in Wärmekontakt stehender Plattenschichten aufgebaut ist. Dabei bildet die eine Gruppe übernächster Plattenschichten die zweite Vorreformierungsstufe 3, während die andere Gruppe übernächster Plattenschichten die CO-Shiftstufe 5 bildet. Ein Verbindungskanal 17 mit entsprechendem eintrittsseitigem Sammelkanal und austrittsseitigem Verteilerkanal führt vom Ausgang der ersten Vorreformierungsstufe 2 zum Eingang der zweiten Vorreformierungsstufe 3, und ein weiterer Verbindungskanal 18 führt vom Ausgang der CO-Shiftstufe 5 zum Eingang der CO-Oxidationsstufe 6.

An das Shiftstufen/Vorreformierungs-Modul 16 schließt sich ein Reformer/Brenner-Modul 19 an, wiederum in Form eines Plattenstapelaufbaus mit einer Wärmeübertragerstruktur, bei der zwei Gruppen übernächster Plattenschichten miteinander über entsprechende Plattenwandungen in Wärmekontakt stehen. Die eine Gruppe übernächster Plattenschichten bildet den Hauptreformer 4, während die andere Gruppe übernächster Plattenschichten den zugehörigen katalytischen Brenner 8 bildet. Dem Reformer/Brenner-Modul 19 ist ein Verbindungskanal 20 zugeordnet, der von der Auslaßseite des verdampferseitigen Brenners 7 zur Einlaßseite des reformerseitigen Brenners 8 führt und dabei die zwischenliegenden Module 12 und 16 passiert. Durch den Verbindungskanal 20 werden die beiden katalytischen Brenner 7, 8 seriell verbunden. Über einen in den Verbindungskanal 20 mündenden Einlaß 20a kann zusätzlich sauerstoffhaltiges Gas und gegebenenfalls auch Brennstoff für den reformerseitigen Brenner 8 in den Verbindungskanal 20 zudosiert werden. Das Verbrennungsabgas verläßt den reformerseitigen katalytischen Brenner 8 über einen Abgasauslaß 21 mit zugehörigem Sammelkanal. Ein Verbindungskanal 22 mit eintrittsseitigem Sammelkanal und austrittsseitigem Verteilerkanal führt vom Hauptreformer 4 zur CO-Shiftstufe 5, und ein weiterer Verbindungskanal 23 mit eintrittsseitigem Sammelkanal und austrittsseitigem Verteilerkanal führt von der zweiten Vorreformierungsstufe 3 zum Hauptreformer 4.

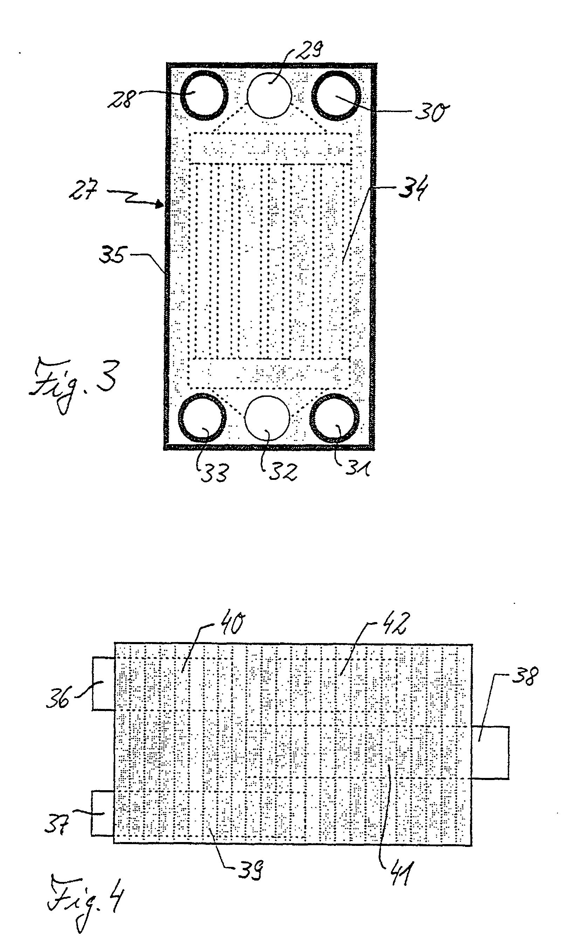

Fig. 2 zeigt eine weitere Reaktorbaueinheit, die in ihrem Aufbau im wesentlichen derjenigen von Fig. 1 entspricht, wobei für funktionell gleiche Elemente dieselben Bezugszeichen verwendet sind. Die Reaktorbaueinheit von Fig. 2 unterscheidet sich von derjenigen von Fig. 1 dadurch, daß die verschiedenen Module 9, 12, 16, 19 nicht direkt, sondern unter Zwischenfügung je einer thermisch isolierenden Platte 24, 25, 26 aneinandergrenzen. Dadurch ist das Verdampfer/Brenner-Modul 9 vom Oxidationsstufen/Vorreformierungs-Modul 12, dieses wiederum vom Shiftstufen/Vorreformierungs-Modul 16 und dieses wiederum vom Reformer/Brenner-Modul 19 thermisch entkoppelt.

Ersichtlich besitzen die beiden Reaktorbaueinheiten der Fig. 1 und 2 einen besonders kompakten Aufbau bei gleichzeitiger Integration aller für eine Wasserdampfreformierung von Methanol oder einem anderen Kohlenwasserstoff mit hohem Wirkungsgrad vorteilhaften Komponenten in Form eines Verdampfers 1, einer zweistufigen Vorreformierungseinheit 2, 3, eines Hauptreformers 4, einer zweistufigen CO-Entfernungseinheit 5, 6 und je eines katalytischen Brenners 7, 8 für Verdampfer 1 und Hauptreformer 4. Jedes Modul 9, 12, 16, 19 kann aus einer individuell festlegbaren Anzahl von Plattenschichtungen aufgebaut werden, so daß durch einfache Modifikationen eine optimale Anpassung an den jeweiligen Anwendungsfall möglich ist und unterschiedliche Leistungsklassen für jede der in die Reaktorbaueinheit integrierten Anlagenkomponenten realisierbar sind. Neben den gezeigten Modulen 9, 12, 16, 19 vom Plattenstapeltyp ist alternativ die Verwendung funktionell gleicher Module vom Rohrbündeltyp für eines oder mehrere der Module 9, 12, 16, 19 möglich.

Anstelle der gezeigten Bauform der Module 9, 12, 16, 19, bei der im Plattenstapel jeweils eine Plattenschicht der einen Anlagenkomponente mit einer Plattenschicht der anderen Anlagenkomponente des Moduls abwechselt und daher das Verhältnis der Anzahl der Plattenschichten für die beiden Komponenten im wesentlichen 1:1 beträgt, sind je nach Bedarf modifizierte Module mit beliebigem anderen Verhältnis der Plattenschichtanzahl der beiden jeweiligen Anlagenkomponenten verwendbar.

Eine weitere Modifikation der in den Fig. 1 und 2 gezeigten Reaktorbaueinheiten besteht darin, innerhalb der CO-Entfernungseinheit einen mehrstufig ausgelegten CO-Oxidator vorzusehen. Bei einer weiteren, nicht gezeigten Variante sind im Oxidationsstufen/Vorreformierungs-Modul 12 und/oder im Shiftstufen/Vorreformierungs-Modul 16 Heizplattenschichten integriert, die mit heißem Verbrennungsabgas der katalytischen Brennereinheit 7, 8 durchströmt werden können.

Der kompakte Aufbau der Reaktorbaueinheiten hat nur einen geringen Platzbedarf und weist aufgrund der geringen Oberfläche vergleichsweise niedrige Wärmeverluste auf. Es ergibt sich ein hoher Wirkungsgrad der Anlage, wozu auch beiträgt, daß die Abwärme der CO-Oxidationsstufe 6 und der CO-Shiftstufe 5 zum Heizen der Vorreformierungsstufen 2, 3 genutzt wird. Durch die Plattenstapelanordnung und die Anordnung der verschiedenen Funktionskomponenten der Anlage wirken Selbstregelmechanismen, die den Steuerungs- und Regelaufwand für die Anlage gering halten und gleichzeitig eine hohe Zuverlässigkeit des Systems gewährleisten. Durch das geringe Volumen der Reaktorbaueinheit und die kurzen Gasströmungswege besitzt die Reaktorbaueinheit und damit die Anlage insgesamt eine vergleichsweise hohe Dynamik und ein schnelles Aufheizverhalten beim Kaltstart, wie es gerade auch für den mobilen Einsatz in brennstoffzellenbetriebenen Kraftfahrzeugen wegen den dort typischen, raschen Lastwechseln erwünscht ist, da die Gesamtmasse der Reaktorbaueinheit relativ niedrig ist und außerdem Heizelemente in Form der katalytischen Brenner integriert sind. Der modulare Aufbau ermöglicht eine einfache Hochskalierung auf jedes jeweils gewünschte Leistungsvermögen der Anlage.

Fig. 3 zeigt eine Draufsicht auf eine Wärmeübertragerplatte 27, wie sie in den Reaktorbaueinheiten der Fig. 1 und 2 für das Verdampfer/Brenner-Modul 9 und in weitestgehend ähnlicher Bauform für die anderen Module verwendbar ist. An den gegenüberliegenden Plattenschmalseiten sind je drei Öffnungen 28, 29, 30, 31, 32, 33 vorgesehen, wobei jeweils lagegleiche Öffnungen der im Stapel aufeinanderfolgenden Platten unter Bildung entsprechender Einlaß- oder Auslaßkanäle bzw. Verteiler- oder Sammelkanäle fluchtend überlappen. Bei der Platte 27 von Fig. 3 bildet das mittlere Paar sich gegenüberliegender Öffnungen 29, 32 einen Teil eines entsprechenden Sammel- bzw. Verteilerkanals beispielsweise des Verdampfers 7 und fungiert als Fluideinlaß bzw. Fluidauslaß. Dabei gelangt das Fluid über den Einlaß in die Ebene der Platte 27 und strömt dort längs einer an der Platte vorgesehenen Stützund Verteilerstruktur 34 zum gegenüberliegenden Auslaß, wobei es mit dem an der anderen Plattenseite entlangströmenden Medium, beispielsweise dem heißen Brennerabgas, in Wärmekontakt tritt. Die übrigen, in Fig. 3 dick umrahmt gezeichneten Öffnungen 28, 30, 31, 33 und der Plattenrand 35 bilden gasdichte Verbindungen, mit denen die übrigen Medien im Plattenstapel die betreffende Plattenschicht passieren können. Diese Öffnungen 28, 30, 31, 33 können beispielsweise Teil des Brennereinlasses 10, des Reformatgasauslasses 14, des Lufteinlasses 13 für die CO-Oxidationsstufe 2 bzw. des Verbindungskanals 20 vom verdampferseitigen Brenner 7 zum reformerseitigen Brenner 8 sein.

Fig. 4 zeigt in einer Draufsicht die kompakte Reaktorbaueinheit von Fig. 1 mit ihrer Plattenstapelbauweise, wobei in dieser Ansicht zwei Ein- bzw. Auslässe 36, 37 am einen Stapelstirnende und ein weiterer Ein- oder Auslaß 38 am gegenüberliegenden Stapelstirnende zu erkennen sind. Zusätzlich ist deren Erstreckung in den Plattenstapelaufbau hinein zur Bildung entsprechender Einlaß- oder Auslaßkanäle bzw. Verteiler- oder Sammelkanäle 39, 40, 41 gestrichelt angedeutet. Des weiteren ist einer der inneren Verbindungskanäle 42 gestrichelt angedeutet. Die übrigen Ein- und Auslässe münden ebenfalls an den Stapelstirnenden und sind in der Ansicht von Fig. 4 von den gezeigten Ein- oder Auslässen 36, 37, 38 verdeckt.

## Patentansprüche

1. Anlage zur Wasserdampfreformierung eines Kohlenwasserstoffs mit einer Reaktorbaueinheit vom Plattenstapel- und/oder Rohrbündeltyp, die einen Hauptreformer (4), eine katalytische Brennereinheit (7, 8) und eine CO-Entfernungseinheit (5, 6) integriert enthält, wobei der Hauptreformer und die katalytische Brennereinheit über jeweilige Wandungen in direktem Wärmekontakt stehen,
**dadurch gekennzeichnet, daβ**
die Reaktorbaueinheit zusätzlich einen Verdampfer (1) und eine Vorreformierungseinheit (7, 3) integriert enthält, wobei zum einen der Verdampfer mit der katalytischen Brennereinheit und zum anderen die Vorreformierungseinheit mit der CO-Entfernungseinheit über jeweilige Wandungen in direktem Wärmekontakt stehen.

2. Anlage nach Anspruch 1, weiter
**dadurch gekennzeichnet, daß**
- die katalytische Brennereinheit wenigstens zwei katalytische Brenner (7, 8) beinhaltet und
- der Verdampfer (1) mit einem ersten (7) sowie der Hauptreformer (4) mit einem zweiten (8) der katalytischen Brenner je ein Modul (9, 19) mit Wärmeübertragerstruktur bilden.

3. Anlage nach Anspruch 1 oder 2, weiter
**dadurch gekennzeichnet, daß**
- die Vorreformierungseinheit eine erste (2) und eine dieser nachgeschaltete zweite Vorreformierungsstufe (3) und die CO-Entfernungseinheit eine CO-Shiftstufe (5) sowie eine CO-Oxidationsstufe (6) beinhalten und
- die CO-Oxidationsstufe mit der ersten Vorreformierungsstufe und die CO-Shiftstufe mit der zweiten Vorreformierungsstufe je ein Modul (12, 16) mit Wärmeübertragerstruktur bilden.

4. Anlage nach Anspruch 3 in Verbindung mit Anspruch 2, weiter
**dadurch gekennzeichnet, daß**
das Verdampfer/Brenner-Modul (9), das Oxidationsstufen/Vorreformierungs-Modul (12), das Shiftstufen/Vorreformierungs-Modul (16) und das Hauptreformer/Brenner-Modul (19) in dieser Reihenfolge nebeneinanderliegend angeordnet sind.

5. Anlage nach Anspruch 4, weiter
**dadurch gekennzeichnet, daß**
thermisch isolierende Brennelemente (24, 25, 26) zwischen den nebeneinanderliegenden Modulen (9, 12, 16, (19) vorgesehen sind.

6. Anlage nach einem der Ansprüche 3 bis 5, weiter
**dadurch gekennzeichnet, daß**
im Oxidationsstufen/Vorreformierungs-Modul und/oder im Shiftstufen/Vorreformierungs-Modul Heizkanäle vorgesehen sind, durch die Verbrennungsabgas der katalytischen Brennereinheit (7, 8) hindurchführbar ist.

## Claims

1. A system for steam reforming of a hydrocarbon with a reactor assembly of the plate stack and/or tube bundle type, which integrally includes a main reforming unit (4), a catalytic burner unit (7, 8), and a CO removal unit (5, 6), with the main reforming unit and the catalytic burner unit being in direct thermal contact via respective walls,
**characterised in that** the reactor assembly additionally integrally includes an evaporator (1) and a prereforming unit (2, 3), with the evaporator being in direct thermal contact with the catalytic burner unit, on the one hand, and the prereforming unit being in direct thermal contact with the CO removal unit, on the other hand, via respective walls.

2. The system according to Claim 1, further
**characterised in that**
- the catalytic burner unit includes at least two catalytic burners (7, 8), and
- the evaporator (1) with a first (7) and the main reforming unit (4) with a second (8) of the catalytic burners form a module (9, 19) each with a thermal transfer structure.

3. The system according to Claim 1 or 2, further
**characterised in that**
- the prereforming unit includes a first (2) and downstream from this a second prereforming stage (3), and the CO removal unit includes a CO shift stage (5) as well as a CO oxidation stage (6), and
- the CO oxidation stage with the first prereforming stage and the CO shift stage with the second prereforming stage form a module (12, 16) each with a thermal transfer structure.

4. The system according to Claim 3 in connection with Claim 2, further
**characterised in that** the evaporator/burner module (9), the oxidation stage/prereforming module (12), the shift stage/prereforming module (16), and the main reforming unit/burner module (19) are arranged adjacent to one another in this order.

5. The system according to Claim 4, further
**characterised in that** thermally insulating fuel elements (24, 25, 26) are provided between the adjacent modules (9, 12, 16, 19).

6. The system according to one of Claims 3 to 5, further
**characterised in that** heating ducts are provided in the oxidation/prereforming module and/or in the shift stage/prereforming module for passing through combustion exhaust gas of the catalytic burner unit (7, 8).

## Revendications

1. Dispositif de reformage à la vapeur d'eau d'hydrocarbures composé d'un module de réaction à empilements ou/et à faisceau tubulaire qui comprend sous forme intégrée un reformeur principal (4), une unité de combustion catalytique (7, 8) et une unité d'extraction de CO (5, 6), le reformeur principal et l'unité de combustion catalytique étant en contact thermique direct via leurs parois respectives,
**caractérisé en ce que**
le module de réaction comprend en outre un évaporateur (1) et une unité de préreformage (2, 3), l'évaporateur et l'unité de combustion catalytique, d'une part, et l'unité de préreformage et l'unité d'extraction de CO, d'autre part, étant en contact thermique direct via leurs parois respectives.

2. Dispositif selon la revendication 1,
**caractérisé en ce que**
- l'unité de combustion catalytique comprend au moins deux brûleurs catalytiques (7, 8) et
- l'évaporateur (1) et un premier brûleur catalytique (7), et le reformeur principal (4) et un deuxième brûleur catalytique (8) forment respectivement un module à structure caloporteuse (9, 19).

3. Dispositif selon la revendication 1 ou 2,
**caractérisé en ce que**
- l'unité de préreformage comprend un premier (2) et, disposé en aval de celui-ci, un deuxième étage de préreformage (3), et l'unité d'extraction de CO inclut un étage de shift de CO (5) ainsi qu'un étage d'oxydation de CO (6), et **en ce que**
- l'étage d'oxydation de CO et le premier étage de préreformage, et l'étage de shift de CO et le deuxième étage de préreformage forment respectivement un module (12, 16) à structure caloporteuse.

4. Dispositif selon la revendication 3 en liaison avec la revendication 2,
caractérisé ce que
le module évaporateur/brûleur (9), le module étage d'oxydation/préreformage (12), le module étage de shift/préreformage (16) et le module reformeur principal/brûleur (19) sont disposés dans cet ordre de succession les uns à côté des autres.

5. Dispositif selon la revendication 4,
**caractérisé en ce que**
des éléments combustibles thermiquement isolants (24, 25, 26) sont prévus entre les modules (9, 12, 16, 19) disposés les uns à côté des autres.

6. Dispositif selon l'une des revendications 3 à 5,
**caractérisé en ce que**
des canaux de chauffe permettant le passage des gaz d'échappement de l'unité de combustion catalytique (7, 8) sont prévus dans le module étage d'oxydation/préreformage et/ou le module étage de shift/préreformage.
